# EUROPÄISCHE PATENTANMELDUNG

(11) **EP 0 541 508 A2**
(43) Veröffentlichungstag der Anmeldung: **12.05.1993**
(21) Anmeldenummer: 92890234.5
(22) Anmeldetag: 04.11.1992
(51) Int. Cl.: G06F 11/20

(54) **Rechnersystem**

(30) Priorität: 04.11.1991 AT 2185/91
(71) Anmelder: Alcatel Austria Aktiengesellschaft, A-1210 Wien (AT)
(72) Erfinder: Hartberger, Manfred, A-1210 Wien (AT)

(57) **Zusammenfassung**

Rechnersystem mit zwei parallel arbeitenden Rechnern, von denen einer als Hauptrechner und der andere als Stand-by-Rechner auf einen gemeinsamen Befehlsausgang arbeiten. Um eine ständige, kontrollierte Ausgabe von nach einem Programm verarbeiteter Daten sicherzustellen, ist vorgesehen, daß jeder Rechner (R1, R2) eine den Ablauf des Programms überwachende Schaltung aufweist, die bei ordnungsgemäßem Programmablauf ein Lebenstakt-Signal niedriger Frequenz abgibt und dieses bei einer Endlosschleife oder einem Halt des Programms absetzt und eine weitere Schaltung aufweist, die während des Laufes des Rechners (R1, R2) ein Dauersignal abgibt, das ein Arbeits-Relais (D1, D2) steuert, und der Ausgang der das Lebenstakt-Signal liefernden Schaltung eines jeden Rechners (R1, R2) mit einer Überwachungsschaltung (LCI1, LCI2) verbunden ist, die ein Lebenstakt-Relais (U1, U2) steuert, dem eine mit Kontakten des Arbeits- und des Lebenstakt-Relais (D1, D2; U1, U2) des jeweils anderen Rechners (R1, R2) gebildete Verriegelungsschaltung (KU2, KD1;KU1, KD2) zugeordnet ist und dessen einer Kontakt (KU12, KU22) dem Ausgang des zugeordneten Rechners (R1, R2) und dem gemeinsamen Befehlsausgang (KO) geschaltet ist, wobei die mit dem Befehlsausgang (KO) verbundenen Anschlüsse dieser Kontakte (KU12, KU22) der Lebensdauer-Relais (U1, U2) miteinander verbunden sind.

## Beschreibung

Die Erfindung bezieht sich auf ein Rechnersystem mit zwei parallel arbeitenden Rechnern, von denen einer als Hauptrechner und der andere als Stand-by-Rechner auf einen gemeinsamen Befehlsausgang arbeiten.

Solche Rechnersysteme werden für Zwecke eingesetzt, bei denen ein sehr hohes Maß an Zuverlässigkeit gefordert ist. Bei bekannten Systemen dieser Art werden die Ausgänge der beiden Rechner miteinander verglichen und diese nur dann weiter verarbeitet, wenn die Ausgänge idente Signale liefern. ein solches System ist nur dann verwendbar, wenn die Signalausgabe unterbrochen werden kann und es nur darauf ankommt allenfalls unrichtige Ergebnisse von Programmabläufen auszuschließen. Für Anwendungszwecke, bei denen eine ständige Signalausgabe des Rechnersystems erforderlich ist, wie z.B. bei Steuerungen von Anlagen und Einrichtungen, sind solche Systeme nicht geeignet, da es bei einem Fehler in einem Rechner zu einer Unterbrechung der Signalausgabe kommt.

Weiters sind Rechnersysteme mit drei Rechnern bekannt, deren Ausgangssignale miteinander verglichen werden und im Falle von Unterschieden zwischen den einzelnen Ausgangssignalen jene beiden Rechner zum Befehlsausgang durchgeschaltet werden, die idente Signale liefern.

Der Nachteil eines solchen Systems, bei dem mit sehr großer Sicherheit eine ständige richtige Signalausgabe gewährleistet ist, liegt in dem erforderlichen hohen Aufwand

Ziel der Erfindung ist es, diese Nachteile zu vermeiden und ein Rechnersystem der eingangs erwähnten Art vorzuschlagen, bei dem mit geringem Aufwand eine ständige kontrollierte Signalausgabe an dem gemeinsamen Befehlsausgang gewährleistet ist.

Erfindungsgemäß wird dies dadurch erreicht, daß jeder Rechner eine den Ablauf des Programms überwachende Schaltung aufweist, die bei ordnungsgemäßem Programmablauf ein Lebenstakt-Signal niedriger Frequenz abgibt und dieses bei einer Endlosschleife oder einem Halt des Programms absetzt und eine weitere Schaltung aufweist, die während des Laufes des Rechners ein Dauersignal abgibt, das ein Arbeits-Relais steuert, und der Ausgang der das Lebenstakt-Signal liefernden Schaltung eines jeden Rechners mit einer Überwachungsschaltung verbunden ist, die ein Lebenstakt-Relais steuert, dem eine mit Kontakten des Arbeits- und des Lebenstakt-Relais des jeweils anderen Rechners gebildete Verriegelungsschaltung zugeordnet ist und dessen einer Kontakt dem Ausgang des zugeordneten Rechners und dem gemeinsamen Befehlsausgang geschaltet ist, wobei die mit dem Befehlsausgang verbundenen Anschlüsse dieser Kontakte der Lebensdauer-Relais miteinander verbunden sind.

Auf diese Weise ist gewährleistet, daß bei einem Fehler im Programmablauf des als Hauptrechner arbeitenden Rechners dieser vom Befehlsausgang getrennt und der bisher als Stand-by-Rechner arbeitende Rechner mit dem Befehlsausgang verbunden wird. Auf diese Weise ist mit relativ geringem Aufwand eine ständige Signalausgabe am Befehlsausgang des Systems gewährleistet, auch wenn es zu einer Störung im Programmablauf des als Hauptrechner arbeitenden Rechners kommt. In diesemm Falle erfolgt die Signalausgabe unterbrechungslos vom bisher als Stand-by-Rechner arbeitenden Rechner. Diese unterbrechungslose Umschaltung ist, wenn das Programm des als Hauptrechner arbeitenden Rechners in eine Endlosschleife läuft durch die Überwachung des Lebenstaktes gewährleistet. Falls dagegen des Programm des als Hauptrechner arbeitenden Rechners in ein Halt läuft und stehen bleibt, so führt dies zu einer Unterbrechung des Dauersignals, wodurch das von diesem gesteuerte Arbeits-Relais abfällt und eine Umschaltung des Befehlsausganges auf den bisherigen Stand-by-Rechner auslöst.

Nach einem weiteren Merkmal der Erfindung kann vorgesehen sein, daß eine Schaltung zum zeitversetzten Start des Lebenstakt-Signales der beiden Rechner beim Start derselben vorgesehen ist.

Dadurch kann auf einfache Weise festgelegt werden, welcher der beiden Rechner beim Hochfahren derselben zum Befehlsausgang durchgeschaltet wird.

Nach einem weiteren Merkmal der Erfindung kann vorgesehen sein, daß die Lebensdauer-Relais als bistabile Relais ausgebildet sind und die Überwachungsschaltungen, wie auch Lebensdauer-Relais und Arbeits-Relais eines jeden Rechners auf separaten Leiterplatten angeordnet sind, wobei auf letzteren auch eine Einrichtung zum händischen Umschalten des Befehlsausganges auf einen bestimmten Rechner angeordnet sind.

Auf diese Weise ist es möglich im Falle eines Fehlers der Überwachungsschaltung oder der zur Umschaltung des Befehlsausganges von einem Rechner zum anderen erforderlichen Relais nach einem entsprechenden händischen Umschalten die entsprechende Leiterplatte auszutauschen.

Die Erfindung wird nun anhand der Zeichnung näher erläutert. Dabei zeigen:
Fig. 1 schematisch ein erfindungsgemäßes Rechnersystem, und
Fig. 2 schematisch ein Ausführungsbeispiel für die zur automatischen Umschaltung des Befehlsausganges von einem Rechner zum anderen vorgesehenen Einrichtung.

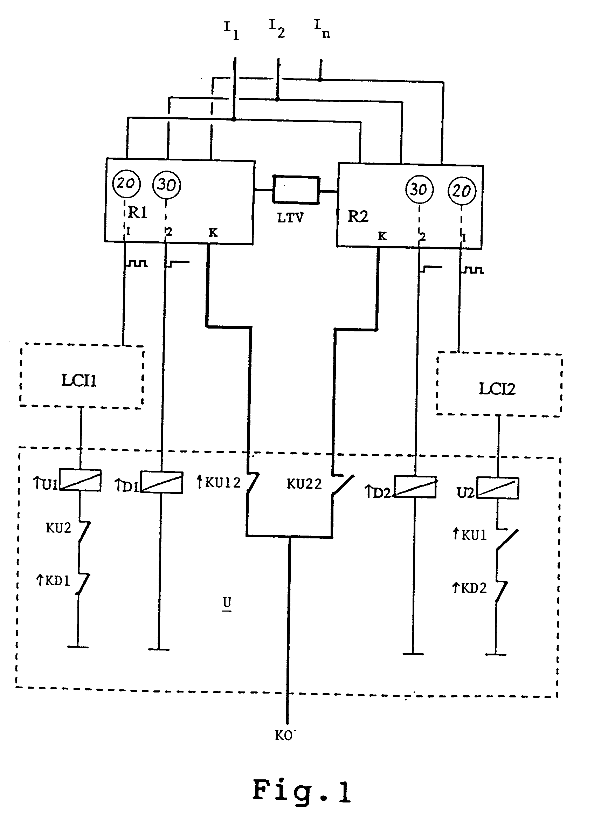

Wie aus der Fig. 1 ersichtlich ist, sind die Eingänge I₁, bis Iₙ der beiden Rechner R1 und R2 parallel geschaltet. Dabei arbeitet der Rechner R1 als Hauptrechner und der Rechner R2 als Stand-by-Rechner, wobei aber beide Rechner R1, R2 die an den Eingängen I₁ bis Iₙ einlangenden Informationen nach identen Programmen gleichzeitig verarbeiten und die verarbeiteten Signale an den Ausgängen K beider Rechner R1, R2 zur gleichen Zeit abgreifbar sind.

Die Rechner R1 und R2 weisen je einen Software-Modul 20 auf, die den Ablauf des Programms überwachen und bei einem ordnungsgemäßen Programmablauf ein Lebenstakt-Signal niedriger Frequenz erzeugen, das am Ausgang 1 eines jeden Rechners R1, R2 abgreifbar ist. Die Abgabe dieses Signales unterbleibt, sobald das Programm in eine Endlosschleife oder in einen Halt läuft.

Weiters wird durch einen Software-Modul 30 ein Dauersignal erzeugt, das bei einem Halt des Rechners automatisch rückgesetzt wird, welches Dauersignal an den Ausgängen 2 eines jeden Rechners R1, R2 abgreifbar ist.

An den Ausgang 1 eines jeden Rechners R1, R2 ist eine Überwachungsschaltung LCI1, bzw LCI2 angeschlossen, die ein Lebenstakt-Relais U1, bzw. U2 steuert. Dabei wird ein Anziehen des entsprechenden Relais U1, U2 ermöglicht, solange die Überwachungsschaltung LCI1, LCI2 ein einem anliegenden Lebenstakt-Signal entsprechendens Signal liefert.

Weiters steuert der Ausgang 2 eines jeden Rechners R1, R2 ein Arbeits-Relais D1, D2.

Die Lebenstakt-Relais U1, U2 sind mit einer Reihenschaltung eines Arbeitskontaktes des dem selben Rechner R1, R2 zugeordneten Arbeitsrelais D1, D2 und eines Ruhekontaktes des dem anderen Rechner zugeordneten Lebenstakt-Relais U1, U2, gegeneinander verriegelt.

Dabei ist durch die Software der beiden Rechnern R1, R2 sichergestellt, daß die Lebenstakte der beiden Rechner R1, R2 gegeneinander um eine geringe Zeitspanne zeitversetzt starten. Dadurch wird sichergestellt, daß bei Hochfahren der beiden Rechner R1, R2 eines der beiden Lebenstakt-Relais U1, U2 zuerst anzieht und damit ein Anzeihen des Lebenstakt-Relais U1, U2 des anderen Rechners über seinen Ruhekontakt verhindert.

Dabei schaltet ein Arbeitskontakt KU12 des Lebenstakt-Relais U1, bzw. eine Arbeitskontakt KU22 des Lebenstakt-Relais U2 den Ausgang K des jeweils zugeordneten Rechners R1, R2 zum Befehlsausgang KO durch, wobei die beiden Arbeitskontakte KU12 und KU22 miteinander verbunden sind.

Dadurch ist sichergestellt, daß sobald das Programm des als Hauptrechner arbeitenden Rechners R1, R2, dessen Ausgang K zum Befehlsausgang KO durchgeschaltet ist, in eine Endlosschleife läuft, wodurch kein Lebenstakt-Signal mehr zur entsprechenden Überwachungsschaltung, z.B. LCI1 gelangt und daher das entsprechende Lebenstakt-Relais, z.B. U1 umschaltet. Dadurch zieht das jeweils andere Lebensdauer-Relais, z.B. U2 an, wodurch der Arbeitskontakt KU12 öffnet und der Arbeitskontakt KU22 schließt und daher der Ausgang K des anderen Rechners, z.B. R2, zum Befehlsausgang KO durchgeschaltet ist.

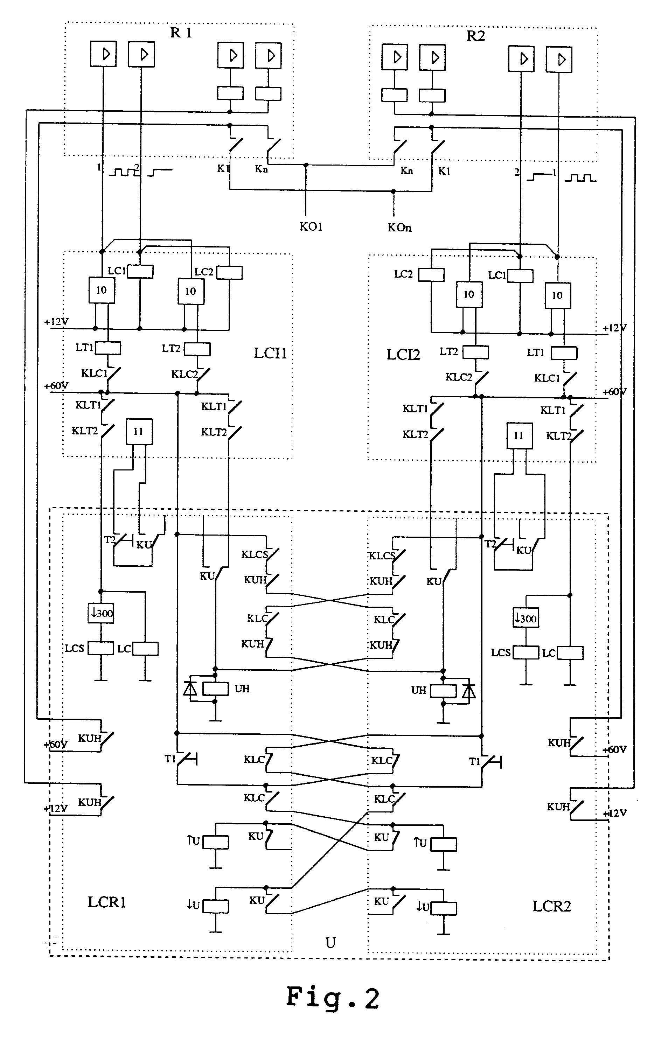

Fig. 2 zeigt ein Blockschaltbild der Überwachungsschaltungen LCI1 und LCI2 und der Umschalteinheit U, die im wesentlichen durch die Lebenstakt-Relais U1, U2 und die Arbeitsrelais gebildet ist. Dabei entsprechen die Relais LC1 und LC2 auf der Platine LCI1 dem Relais D1 der Ausführungsform nach der Fig. 1 und die Relais LC1 und LC2 auf der Platine LCI2 dem Relais D2 der Ausführungsform nach der Fig. 1.

Weiters entspricht das Relais U auf der Platine LCR1, bzw. das Relais U auf der Platine LCR2 dem Relais U1 bzw. U2 nach der Fig. 1.

Weiters entsprechen die Kontakte KU12 bzw. KU22 nach der Fig. 1 den Kontakten KUH auf der Platine LCR 1 bzw, LCR2. Allerdings werden bei der Ausführungsform nach der Fig. 2 nicht mehr alle Ausgänge K einzeln umgeschaltet, wie dies bei der Ausführungsform nach der Fig. 1 der Fall ist, sondern es wird die Anspeisung der Ausgangsrelais und die Anspeisung der Ausgangskontakte umgeschlatet um mit weniger Kontakten das Auslangen zu finden.

Wie aus der Fig. 2 zu ersehen ist, weist die Umschalteinheit U weiters Tasten T1, die für eine manuelle Umschaltung des Befehlsausganges KO von einem Rechner zum anderen vorgesehen sind. Weiters sind noch Tasten T2 vorgesehen, mit denen ein Selbsttest der Überwachungsschaltungen LCI1, bzw. LCI2 ausgelöst werden kann.

Die Überwachungsschaltungen LCI1, LCI2 weisen zwei parallel geschaltete Blink-Dauer-Erkennungsschaltungen 10 und Relais LC1, LC2 und LT1 sowie LT2 auf, wobei die Relais LC1, und LC2 parallel geschaltet und mit dem Ausgang 2 des jeweils zugeordneten Rechners R1, R2 verbunden sind. Weiters ist jede Schaltung LCI1 mit einer Selbsttestschaltung 11 versehen.

Beim Hochlaufen der beiden Rechner R1, R2 setzt jeder der beiden Rechner ein Dauersignal, das vom Ausgang 2 abgreifbar ist. Dadurch ziehen die Relais LC1 und LC2 der jeweiligen Schaltungen LC1, LC2 an. Weiters setzen die beiden Rechner R1, R2 den Lebenstakt, sobald sie mit dem Abarbeiten des Programms beginnen, wobei aber die Lebenstakte der beiden Rechner zeitversetzt gesetzt werden.

Die Blink-Dauer-Erkennungsschaltungen 10 der Schaltungen LCI1, LCI2 erkennen das Lebenstakt-Signal und geben ein Signal an die Relais LT1, LT2 ab, sodaß diese anziehen. Über die Kontakte KLT1, KLT2 dieser Relais können nun auch die Relais LCS und LC anziehen, wodurch in weiterer Folge das Lebenstakt-Relais anzieht, das jenem Rechner R1, R2 zugeordnet ist, der zuerst den Lebenstakt setzt.

Bei einem Ausfall des mit dem Befehlsausgang KO verbundenen Rechners R1, R2 setzt dieser das Dauersignal an seinem Ausgang 2 retour, wodurch die entsprechenden Relais LC1 und LC2 abfallen. Dadurch fallen auch dem selben Rechner zugeordnete Relais LT1 und LT2 und weiters das zugeordnete Relais LC ab.

Über die Kontakte KLC der in beiden Schaltungen LCR1, LCR2-angeordneten Relais LC werden die beiden Lebenstakt-Relais U1, U2 umgeschaltet und damit, wie bereits erläutert, der Befehlsausgang KO mit dem jeweils anderen Rechner R1, R2 verbunden.

Dabei wird bis zum Anzug des Relais UH einer Schaltung LCR1, bzw. LCR2 das Relais UH der anderen Schaltung, das bisher angezogen war, über die Kontakte KLS und KUH der in beiden Schaltungen LCR1, LCR2 angeordneten Relais UH und LS gehalten. Sollte das entsprechende Relais UH, z.B. das Relais UH der Schaltung LCR2 nicht anziehen, so wird das angezogene Relais UH, z.B. das Relais UH der Schaltung LCR1 nach einer bestimmten Zeit, z.B. 300msec durch das Relais LCS der Schaltung LCR1 abgeworfen. Die Abfallverzögerung, die durch die Schutzdiode über dem jeweiligen Relais UH bedingt ist, genügt, um eine sichere Überschneidung der Befehlsausgaben sicherzustellen.

Bei einem Ausfall des Lebenstaktes des als Hauptrechner arbeitenden Rechners R1, R2 wird dieser Ausfall durch die entsprechnden Blink-Dauer-Erkennungsschaltungen 10 erkannt und diese bewirken einen Abfall der entsprechenden Relais LT1 und LT2, wodurch es zu einem Umschalten der Lebenstakt-Relais U1, U2 kommt

Eine händische Umschaltung ist durch Drücken der Umschalttaste T1 auf der jeweiligen Platine LCR1, LCR2 möglich. Dabei werden über die Kontakte KLC die beiden Lebenstakt-Relais U1, U2 umgeschaltet und damit, wie bereits erwähnt, der Befehlsausgang KO mit dem der jeweiligen Platine LCR1, LCR2 zugeordneten Rechner R1, R2 verbunden.

Jede Platine LCI1, LCI2 enthält eine Selbsttesteinrichtung 11 für die Blink-Dauer-Erkennungsschaltung 10. Diese Selbsttesteinrichtung 11 legt eine Dauerspannung an den Eingang der Blink-Dauer-Erkennungsschaltung 10 und überwacht ob dies von der Blink-Dauer-Erkennungsschaltung 10 erkannt wird. Der ordnungsgemäße Ablauf des Selbsttestes wird durch Leuchtdioden angezeigt. Ein Selbsttest wird durch Drücken der Taste T2 an der Platine LGR1, bzw. LCR2 gestartet. Ein Selbstest ist jedoch nur beim als Stand-by-Rechner arbeitenden Rechner zulässig, was durch den Kontakt KU gewährleistet wird.

## Patentansprüche

1. Rechnersystem mit zwei parallel arbeitenden Rechnern, von denen einer als Hauptrechner und der andere als Stand-by-Rechner auf einen gemeinsamen Befehlsausgang arbeiten, dadurch gekennzeichnet, daß jeder Rechner (R1, R2) eine den Ablauf des Programms überwachende Schaltung (20) aufweist, die bei ordnungsgemäßem Programmablauf ein Lebenstakt-Signal niedriger Frequenz abgibt und dieses bei einer Endlosschleife oder einem Halt des Programms absetzt und eine weitere (30) Schaltung aufweist, die während des Laufes des Rechners (R1, R2) ein Dauersignal abgibt, das ein Arbeits-Relais (D1, D2) steuert, und der Ausgang der das Lebenstakt-Signal liefernder- Schaltung (20) eines jeden Rechners (R1, R2) mit einer Überwachungsschaltung (LCI1, LCI2) verbunden ist, die ein Lebenstakt-Relais (U1, U2) steuert, dem eine mit Kontakten des Arbeits- und des Lebenstakt-Relais (D1, D2; U1, U2) des jeweils anderen Rechners (R1, R2) gebildete Verriegelungsschaltung (KU2, KD1:KU1, KD2) zugeordnet ist und dessen einer Kontakt (KU12, KU22) dem Ausgang des zugeordneten Rechners (R1, R2) und dem gemeinsamen Befehlsausgang (KO) geschaltet ist, wobei die mit dem Befehlsausgang (KO) verbundenen Anschlüsse dieser Kontakte (KU12, KU22) der Lebensdauer-Relais (U1, U2) miteinander verbunden sind,

2. Rechnersystem nach Anspruch 1, dadurch gekennzeichnet, daß eine Schaltung (LTV) zum zeitversetzten Start des Lebenstakt-Signales der beiden Rechner (R1, R2 ) beim Start derselben vorgesehen ist.

3. Rechnersystem nach Anspruch 1 oder 2, dadurch gekennzeichnet, daß die Lebensdauer-Relais (U1, U2) als bistabile Relais ausgebildet sind und die Überwachungsschaltungen (LCI1, LCI2), wie auch Lebensdauer-Relais (U1, U2) und Arbeits-Relais (D1, D2) eines jeden Rechners (R1, R2) auf separaten Leiterplatten angeordnet sind, wobei auf letzteren auch eine Einrichtung zum händischen Umschalten des Befehlsausganges (KO) auf einen bestimmten Rechner (R1, R2) angeordnet sind.
